# EUROPEAN PATENT APPLICATION

(11) **EP 2 128 438 A2**
(43) Date of publication of application: **02.12.2009**
(21) Application number: 09161148.3
(22) Date of filing: 26.05.2009
(51) Int. Cl.: F03D 7/04, F03D 9/00

(54) **Method and apparatus for determining and/or providing power output information of wind turbine farms**

(30) Priority: 29.05.2008 US 129560
(71) Applicant: General Electric Company, Schenectady, NY 12345 (US)
(72) Inventor: Sarkar, Abhinanda, 560066, Bangalore, Karnataka (IN); Gujjar, Vineel Chandrakanth, 560017, Bangalore, Karnataka (IN); Anbarasu, Arungalai, 560037, Bangalore, Karnataka (IN)
(74) Representative: Bedford, Grant Richard

(57) **Abstract**

A machine readable medium or media having recorded thereon instructions configured to instruct a computer to monitor a wind farm (202) including a plurality of wind turbines (67, 68, 69, 70, 71, 72, 73, 74, 75, 76) and a meteorological mast (met mast) (204). The instructions are configured to collect measurement data points (300) including at least wind speed and wind direction over time for each of the wind turbines and the met mast removes measurement data points for wind turbines performing in a non-standard manner or that are unavailable to generate remaining measurement data points. The instructions are then configured to statistically determine a power curve model (500) for the wind farm using the remaining measurement data points and outputting data corresponding to the power curve model.

## Description

This invention relates generally to wind turbine power generation, and more particularly to methods and apparatus for determining and/or providing power output information of wind turbine farms.

A plurality of wind turbines are commonly used in conjunction with one another to generate electricity. This plurality of wind turbines comprise a "wind farm." Wind turbines on a wind farm typically include their own meteorological monitors that perform, for example, temperature, wind speed, wind direction, barometric pressure, and/or air density measurements. In addition, a separate meteorological mast or tower ("met mast") having higher quality meteorological instruments that can provide more accurate measurements at one point in the farm is commonly provided. The correlation of meteorological data with power output allows the empirical determination of a "power curve" for a wind turbine.

Prior wind turbines do not fully and accurately predict wind farm performance because they do not take into account interaction between wind turbines in a wind farm and other anomalies that may occur during its operation. It would thus be desirable to obtain wind farm level estimates of the performance of wind farms that are not simply extrapolations of the power curve of a single wind turbine.

In one aspect, some embodiments of the present invention provide a computerized method for determining a power curve for a wind farm having a plurality of wind turbines and a meteorological mast (met mast). The method includes collecting measurement data points of at least wind speed and wind direction over time for each of the wind turbines and the met mast. The measurement data points also include measured power output for each of the wind turbines. The method further includes removing measurement data points for wind turbines performing in a non-standard manner or that are unavailable to generate remaining measurement data points, statistically determining a power curve model for the wind farm using the remaining measurement data points, and displaying the power curve model for the wind farm.

In another aspect, some embodiments of the present invention provide a computer-aided method for entering into contracts relating to a wind farm having a plurality of wind turbines and a meteorological mast (met mast). The method includes collecting measurement data points including at least wind speed and wind direction over time for each of the wind turbines and the met mast. The measurement data points also include measured power output for each of the wind turbines. The method further includes removing measurement data points for wind turbines performing in a non-standard manner or that are unavailable to generate remaining measurement data points, statistically determining a power curve model for the wind farm using the remaining measurement data points, displaying the power curve model for the wind farm, and using the displayed power curve model for the wind farm to contractually guarantee a wind farm power output to the operator of the wind farm.

In yet another aspect, some embodiments of the present invention provide a machine readable medium or media having recorded thereon instructions configured to instruct a computer to monitor a wind farm having a plurality of wind turbines and a meteorological mast (met mast). The instructions are configured to instruct the computer to collect measurement data points including at least wind speed and wind direction over time for each of the wind turbines and the met mast. The measurement data points also include measured power output for each of the wind turbines. The instructions are further configured to instruct the computer to remove measurement data points for wind turbines performing in a non-standard manner or that are unavailable to generate remaining measurement data points, statistically determine a power curve model for the wind farm using the remaining measurement data points, and display the power curve model for the wind farm.

It will be appreciated that some configurations of the present invention provide a computational and/or monitoring tool for wind farm level performance of a wind plant. A statistically significant shift in a farm power curve as detected by some embodiments of the present invention alerts a plant manager to the existence of potential performance issues in the farm. The farm level power curve also enables product and service offerings to be made to customers such as contractual service agreements based on performance guarantees of a wind plant.

Various aspects and embodiments of the present invention will now be described in connection with the accompanying drawings, in which:
Figure 1 is a flow chart of an exemplary embodiment of a method of the present invention.
Figure 2 is a geographical map of a wind farm.
Figure 3 is a plot of power output by a first wind turbine divided by power output of a second wind turbine generating a wake affecting the first wind turbine at some wind directions.
Figure 4 is a plot similar to Figure 3, but showing power ratios of the first wind turbine with additional wind turbines.
Figure 5 is a power curve for a specific wind turbine resulting from fitting a reduced set of measurements from the wind turbine as power vs. wind speed.
Figure 6 is a histogram showing residual power in kW vs. the number of data points used in plotting the power curve of Figure 5.
Figure 7 is an exemplary wind farm level power curve generated by an embodiment of the present invention. The wind farm is not necessarily the same wind farm used for Figures 2-6.
Figure 8 is another wind farm level power curve for a different wind farm generated by an embodiment of the present invention.
Figure 9 is a flow chart of another exemplary embodiment of the present invention.

The foregoing summary, as well as the following detailed description of certain embodiments of the present invention, will be better understood when read in conjunction with the appended drawings. To the extent that the figures illustrate diagrams of the functional blocks of various embodiments, the functional blocks are not necessarily indicative of the division between hardware circuitry. Thus, for example, one or more of the functional blocks (e.g., processors or memories) may be implemented in a single piece of hardware (e.g., a general purpose signal processor or a block or random access memory, hard disk, or the like). Similarly, the programs may be stand alone programs, may be incorporated as subroutines in an operating system, may be functions in an installed software package, and the like. It should be understood that the various embodiments are not limited to the arrangements and instrumentality shown in the drawings.

As used herein, an element or step recited in the singular and proceeded with the word "a" or "an" should be understood as not excluding plural said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

As used herein, the term "display" means to make available, either in printed form or displayed on a display screen, or electronically recorded on media for display on the computer or electronically transmitted to another computer or display apparatus for remote display or printing.

Also as used herein, "computer" means a general or special purpose computer, workstation, server, or processor together with display capabilities and at least primary storage (RAM and/or ROM, for example). Many computers also have secondary storage (e.g., a hard drive, a floppy drive, flash ROM and/or RAM, and/or a CD or DVD reader and/or writer).

One technical effect of various aspects of the present invention is the determination of an accurate power curve for an entire wind farm as a whole. This power curve is useful for maintaining or guaranteeing the performance of the wind farm. In addition, this software may be used in a service application to monitor existing wind turbine farms.

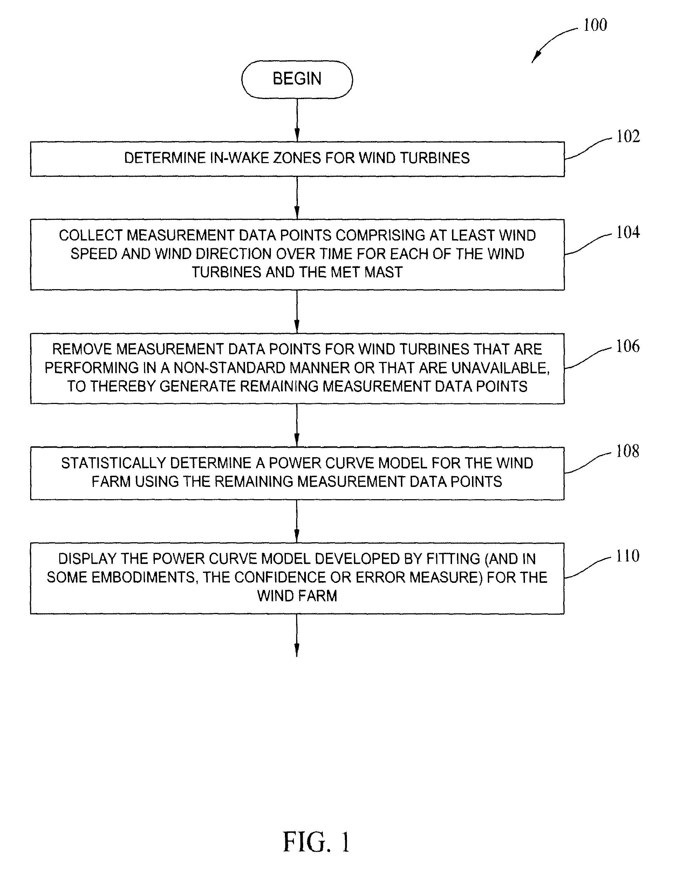

In one exemplary embodiment of a method of the present invention and referring to flow chart 100 of Figure 1, a farm level power curve is determined with respect to a reference point with free stream wind speeds. More particularly, an exemplary computerized method for determining a power curve for a wind farm comprising a plurality of wind turbines and a meteorological mast (met mast) includes, at 102, identifying in-wake zones for each of the wind turbines in the wind farm. At 104, a computer collects measurement data points comprising at least wind speed and wind direction over time for each of the wind turbines and the met mast. (The met mast is a tower on which more accurate meteorological instruments are mounted than that supplied with the wind turbines.) The measurement data points also include measured power output for each respective wind turbine.

At 106, measurement data points for wind turbines that are performing in a non-standard manner or that are unavailable to generate remaining measurement data points are removed. Only one (non-standard or unavailable) data point can be determined or both without limitation. By "non-standard manner," what is meant herein is a wind turbine producing an anomalous output, either as a result of an anomalous wind condition (e.g., a wind turbine within the wake of another wind turbine) or a fault of the wind turbine or measurement equipment. Faults may be determined in some embodiments of the present invention as outlier data points when compared to a nominal or anticipated wind turbine power curve. Some conditions, such as "in maintenance," may be indicated automatically by flags in the data received from individual wind turbines. In some instances, these flags may be set manually. Thus, in some embodiment of the present invention, removing measurement data points for unavailable wind turbines further comprises checking at least one of manually set status flags and automatically set status flags for each wind turbine.

Next, the method continues at 108 by statistically determining a power curve model for the wind farm using the remaining measurement data points. For example, a curve of wind speed at a reference point in the wind farm (such as at the met mast) vs. power output for the wind farm is determined using a least square error method. Other types of curve fitting may also be used. In some embodiments of the present invention, this fitting is also used to determine a confidence or error measure. At 110, the power curve model developed by this fitting (and in some embodiments, the confidence or error measure) is displayed for the wind farm. For example, the computer may print or plot the power curve on paper, or display it on a suitable visual display such as a CRT or LCD display.

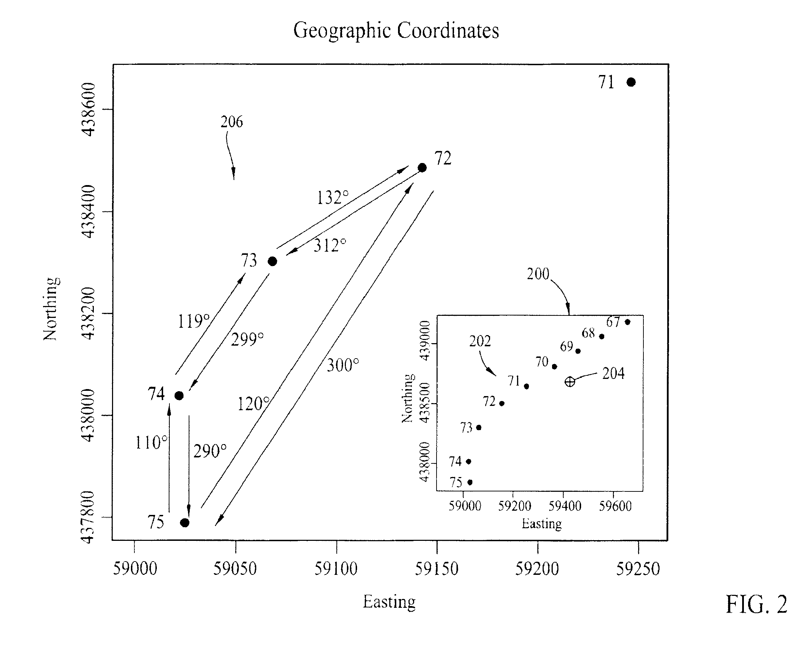

In some embodiments of the present invention, in-wake zones for the wind turbines are determined at 102. In these embodiments, removing measurement data points for wind turbines performing in a non-standard manner further comprises removing measurement data points for wind turbines within in-wake zones. In some embodiments of the present invention and referring to Figure 2, the determination of in-wake zones begins with a map 200 of wind farm 202, shown in the inset of the Figure. Map 200 plots wind turbines 67, 68, 69, 70, 71, 72, 73, 74, and 75 and met mast 204 of wind farm 202 against a set of geographic coordinates. The main portion 206 of Figure 2 illustrates a set of wind turbines likely to produce wakes in conjunction with wind turbine 75, which has been selected for the purposes of this example to show the determination of wakes for a wind turbine. This process would be repeated for each wind turbine in wind farm 202.

Figure 2 shows that the direction of wind turbine 74 from wind turbine 75 is 290°, so that a wake might be expected at wind turbine 75 from a wind blowing from the 290° direction. (Figure 2 is not drawn to scale, so that the angles of the lines and arrows on the Figure need not exactly match the actual angles printed adjacent them. Also, 0° is considered to be measured from a line with an arrowhead pointing eastward rather than northward for this example, although the selection of a 0° reference is arbitrary.) Conversely, wind turbine 74 might be expected to be in a wake of wind turbine 75 when the wind is blowing from the 110° direction. There may be other wakes caused between wind turbine 75 and each of wind turbines 73 and 72, but wind turbine 71 in this example is considered too distant to interact with wind turbine 75 to cause wake disturbances.

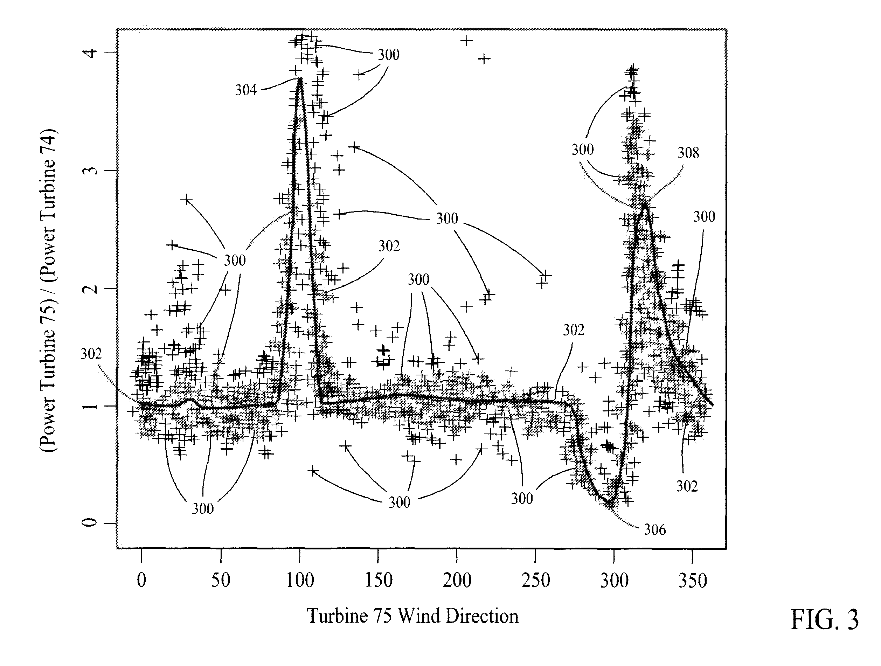

For the wake at wind turbine 75 resulting from wind turbine 74 and referring to Figure 3, data points 300 including wind direction (as measured at a reference point, e.g., met mast 204) and power output are collected from both turbines 74, 75 and the ratio of the output powers of the turbines 74, 75 is correlated against wind direction. (By correlating power ratios, the effect of wind speed is eliminated or at least reduced.) In the resulting curve 302, a sharp peak 304 is found at 110° and a sharp dip 306 at 290° in this example (FIG. 3). A smaller peak 308 is found at about 320°. Sharp dip 304 is indicative of wind incident angles at which wind turbine 75 is in the wake of (at least) wind turbine 74. Sharp peak 306 at 110° is indicative of the wind incident angles at which wind turbine 74 is in the wake of (at least) wind turbine 75. Smaller peak 308 at 320° may indicate an angle at which wind turbine 74 is in the wake of a wind turbine other than wind turbine 75. For purposes of determining the wake region of wind turbine 75 resulting from wind turbine 74, only sharp dip 306 is used.

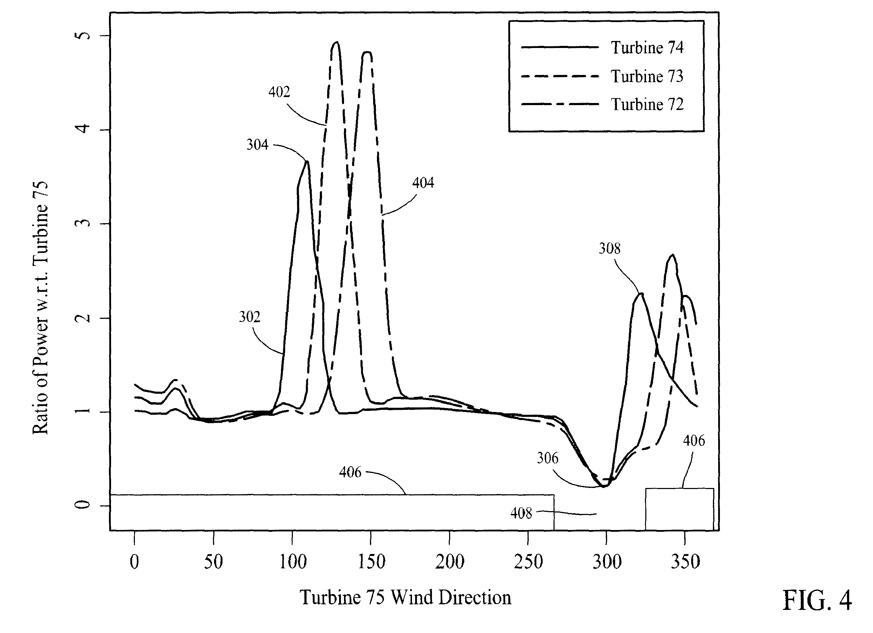

Figure 4 shows curves 302, 402, 404 resulting from correlation of output power of wind turbine 75 with wind turbines 74, 73, and 72, respectively. Peaks and dips in curves 302, 402, and 404 may result from wakes other than those indicating interaction of wind turbines 74, 73, and 72 with wind turbine 75, but it is clear from Figure 4 that the wake region that is of concern for wind turbine 75 in this example is region 408. Thus, only valid measurement data at angles indicated by valid region 406 are used for wind turbine 75. Measurement data at angles indicated by invalid region 408 is discarded.

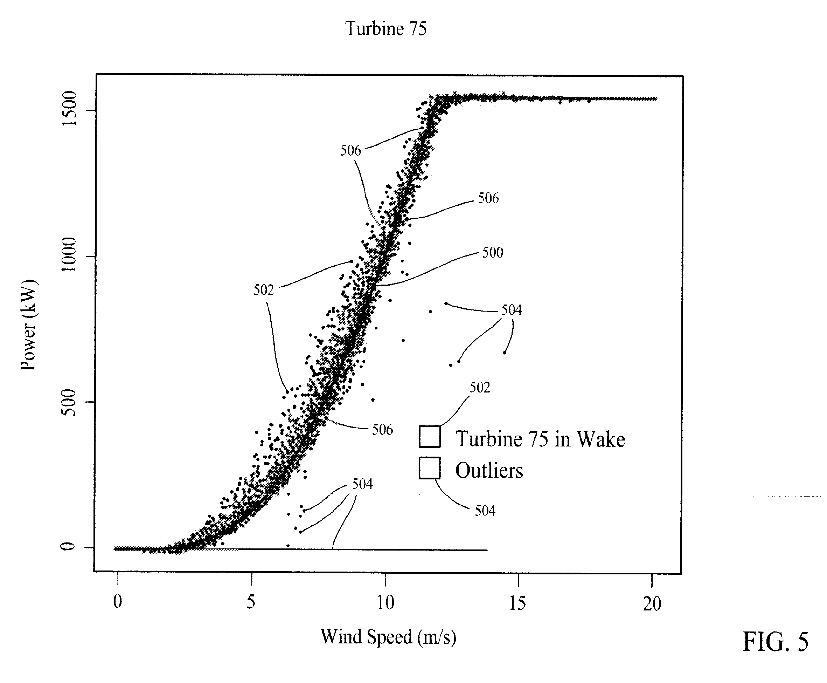

Figure 5 shows a power curve 500 for turbine 75 resulting from plotting the remaining measurements as power vs. wind speed. Measurements 502 from wind turbine 75 while in-wake and outlier measurements 504 from wind turbine 75 (e.g., anomalous measurements and those taken while wind turbine 75 was out of service) are shown in Figure 5, but are discarded for purposes of determining power curve 500. Only remaining data points 506 are used to produce power curve 500 for wind turbine 75.

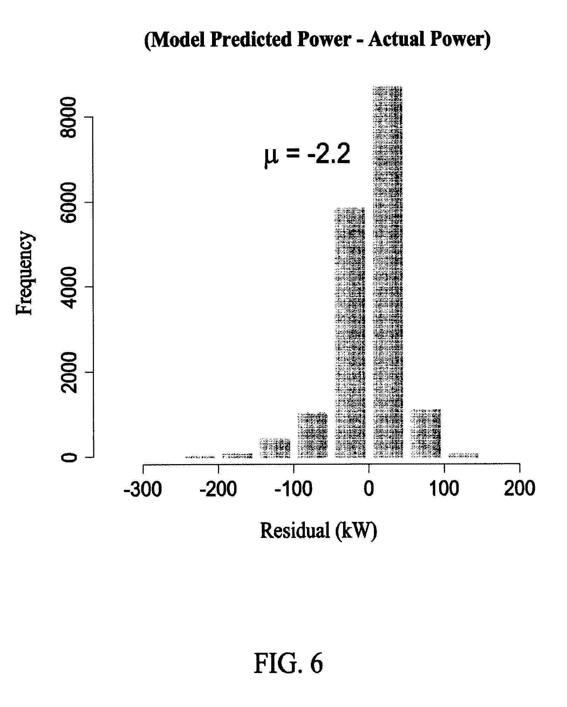

Figure 6 is a histogram 600 showing the residual power in kW vs. the number of remaining data points 506 used in plotting power curve 500 of Figure 5. Histogram 600 can be used in calculating statistical measures of confidence in power curve 500 of Figure 5, including standard error bars, for example. The statistical measures of confidence and the power curves can be combined in a statistically valid manner for all wind turbines in the wind farm. By doing so, one obtains a more accurate wind curve at the wind farm level than would be obtained by adding the design power curves of each of the wind turbines together without the corrections provided by embodiments of the present invention.

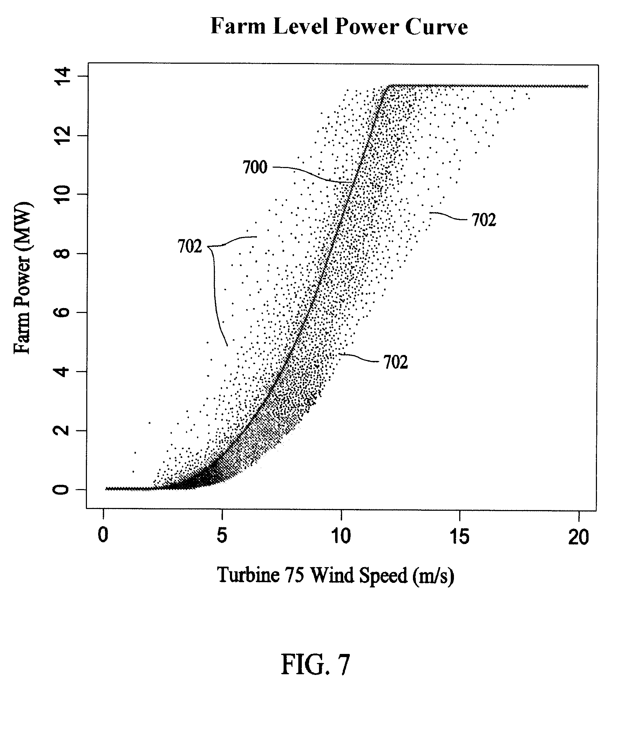

Figure 7 is a wind farm level power curve 700 generated by an embodiment of the present invention. (Power curve 700 is not necessarily the same wind farm as used in the examples of Figures 2 through 6.) All measurement data points 702 are shown, including discarded measurement data points. As is readily observable from Figure 7, power curve 700 is not influenced by outlier measurement data points or measurement data points influenced by in wake conditions. Thus, power curve 700 represents a more accurate model of the output of the wind farm as a function of wind speed at a particular turbine or met mast.

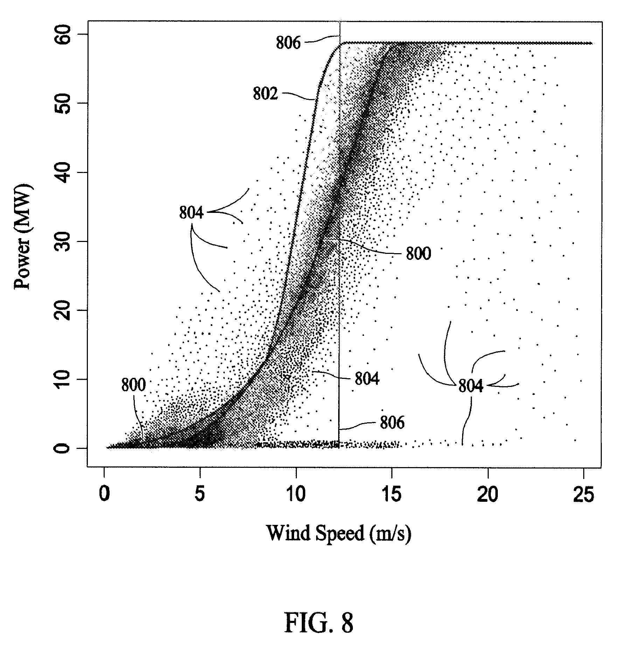

Figure 8 is another wind farm level power curve 800 for a different wind farm that was generated by an embodiment of the present invention. A design power curve 802 generated by assuming nominal performance by each wind turbine at all times and wind directions is shown for comparison, as are all measurement data points 804. A line 806 indicating a wind speed at which each turbine is expected to operate at rated power is shown. (For the wind farm represented by Figure 8, the rated power of each wind turbine is 1500 kW, the number of turbines is 41, and the data collection period is about one year.) The wind speed and power are given in terms of 10 minute averages, although any other averaging periods may be used. For example, an averaging period between 5 and 15 minutes, or exactly 5 minutes, may be used in some embodiments. It can be observed that the difference between the design power curve 802 and the more accurate farm specific power curve 800 is quite significant.

In such embodiments, removing measurement data points for wind turbines performing in a non-standard manner may further comprise removing measurement data points for wind turbines within in-wake zones. In some embodiments, removing measurement data points for unavailable wind turbines further comprises checking at least one of manually set status flags and automatically set status flags for each wind turbine.

In some embodiments of the present invention, the computer determines and displays at least one estimate of statistical confidence for the determined power curve. For example, error bars may be shown on the power curve, or a particular confidence statistic (e.g., µ in Figure 6) may be printed or displayed. Also, in some embodiments, the power curve is used in conjunction with current data measurements to monitor wind farm performance and to determine when to service wind turbines on the wind farm.

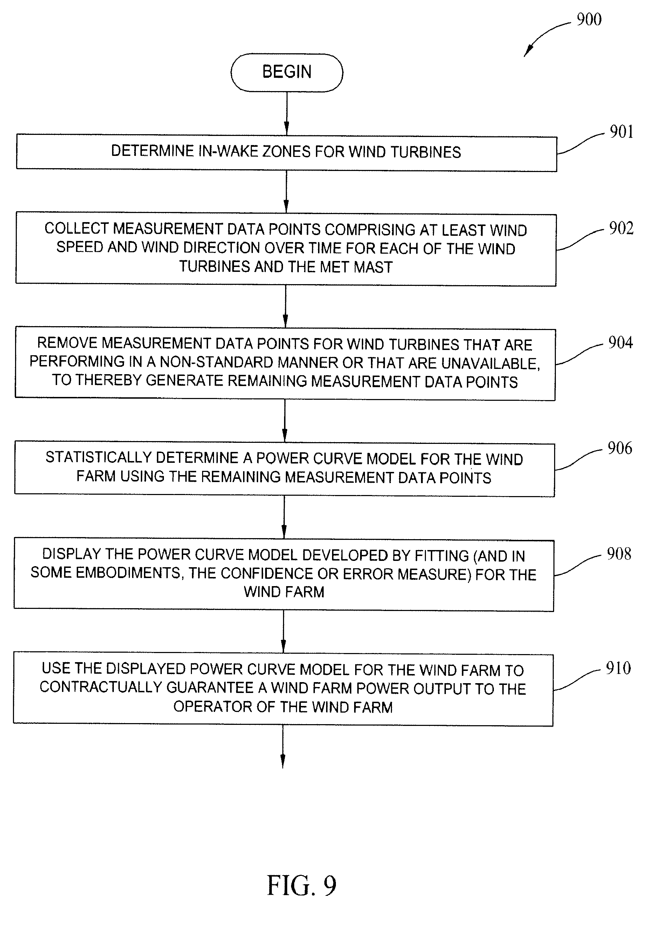

In some embodiments of the present invention, a computer-aided method for entering into contracts relating to a wind farm comprising a plurality of wind turbines and a meteorological mast (met mast) is provided. One embodiment of this method includes, referring to flow chart 900 of Figure 9, collecting measurement data points comprising at least wind speed and wind direction over time for each of the wind turbines and the met mast at 902. The measurement data points include measured power output for each of the wind turbines. At 904, the method continues by removing measurement data points for wind turbines performing in a non-standard manner or that are unavailable to generate remaining measurement data points. At 906, the method further includes statistically determining a power curve model for the wind farm using the remaining measurement data points, and at 908, displaying the power curve model for the wind farm. At 910, the method also includes using the displayed power curve model for the wind farm to contractually guarantee a wind farm power output to the operator of the wind farm. The contract may be made at a price that reflects the certainty of the curve and the amount of power being generated, among other things.

Some embodiments of the above method comprise, at 901, determining in-wake zones for the wind turbines. In such embodiments, removing measurement data points for wind turbines performing in a non-standard manner may further comprise removing measurement data points for wind turbines within in-wake zones. In some embodiments, removing measurement data points for unavailable wind turbines further comprises checking at least one of manually set status flags and automatically set status flags for each wind turbine. The method used in some embodiments may further include determining and displaying at least one estimate of statistical confidence for the determined power curve, which is useful for determining various contractual terms. Wind farm performance may also be monitored to determine when to service wind turbines on the wind farm in furtherance of the contract. The statistically determination a power curve model for the wind farm using the remaining measurement data points may further comprise averaging wind speed and power over intervals of from about 5 minutes to about 15 minutes.

The various method embodiments of the present invention may be physically embodied on a machine readable medium or media having recorded thereon instructions configured to instruct a computer to monitor a wind farm comprising a plurality of wind turbines and a meteorological mast (met mast) to perform the various method embodiments or portions thereof. The machine readable medium or media may include (but is not limited to) one or more ROMs, RAMs, floppy disks, hard disks, flash RAM or ROM, CD-ROM, CD-RW, various kinds of DVDs, and combinations thereof. Software is also commonly distributed via networks such as the Internet and collected on internal hard drives, etc., so the term "machine readable medium or media" is intended to encompass media internal to a computer, such as ROM, RAM, or hard disks. The collection of measurement data points in some embodiments of the present invention may be controlled by the same computer or by a different computer.

While the invention has been described in terms of various specific embodiments, those skilled in the art will recognize that the invention can be practiced with modification within the spirit and scope of the claims.

Various aspects and embodiments of the present invention are now defined by the following numbered clauses:
1. A method for determining a power curve for a wind farm comprising a plurality of wind turbines and a meteorological mast (met mast), said method comprising:
   collecting measurement data points comprising at least wind speed and wind direction over time for at least two of the wind turbines and the met mast;
   removing measurement data points for wind turbines performing in a non-standard manner or that are unavailable to generate remaining measurement data points;
   statistically determining a power curve model for the wind farm using the remaining measurement data points; and
   outputting data corresponding to the power curve model.
2. A method in accordance with Clause 1 further comprising determining in-wake zones for the wind turbines, and wherein removing measurement data points for wind turbines performing in a non-standard manner further comprises removing measurement data points for wind turbines within in-wake zones.
3. A method in accordance with any preceding Clause wherein removing measurement data points for unavailable wind turbines further comprises checking at least one of manually set status flags and automatically set status flags for each wind turbine.
4. A method in accordance with any preceding Clause further comprising determining in-wake zones for the wind turbines, and wherein removing measurement data points for wind turbines performing in a non-standard manner further comprises removing measurement data points for wind turbines within in-wake zones.
5. A method in accordance with any preceding Clause further comprising determining and displaying at least one estimate of statistical confidence for the determined power curve.
6. A method in accordance with any preceding Clause used to monitor wind farm performance and to determine when to service wind turbines on the wind farm.
7. A method in accordance with any preceding Clause wherein said statistically determining a power curve model for the wind farm using the remaining measurement data points further comprises averaging wind speed and power over intervals of from 5 minutes to 15 minutes.
8. A method in accordance with any preceding Clause wherein the measurement data points include measured power output for each of the wind turbines.
9. A computer-aided method for providing a power output of a wind farm comprising a plurality of wind turbines and a meteorological mast (met mast), said method comprising:
   collecting measurement data points comprising at least wind speed and wind direction over time for at least two of the wind turbines and the met mast;
   removing measurement data points for wind turbines performing in a non-standard manner or that are unavailable to generate remaining measurement data points;
   statistically determining a power curve model for the wind farm using the remaining measurement data points;
   outputting data corresponding to the power curve model; and
   using the output data power curve model for the wind farm to provide a wind farm power output to the operator of the wind farm.
10. A method in accordance with Clause 9 further comprising determining in-wake zones for the wind turbines, and wherein removing measurement data points for wind turbines performing in a non-standard manner further comprises removing measurement data points for wind turbines within in-wake zones.
11. A method in accordance with Clause 9 or 10 wherein removing measurement data points for unavailable wind turbines further comprises checking at least one of manually set status flags and automatically set status flags for each wind turbine.
12. A method in accordance with any of Clauses 9 to 11 further comprising determining in-wake zones for the wind turbines, and wherein removing measurement data points for wind turbines performing in a non-standard manner further comprises removing measurement data points for wind turbines within in-wake zones.
13. A method in accordance with any of Clauses 9 to 12 further comprising determining and displaying at least one estimate of statistical confidence for the determined power curve.
14. A method in accordance with any of Clauses 9 to 13 used to monitor wind farm performance and to determine when to service wind turbines on the wind farm.
15. A method in accordance with any of Clauses 9 to 14 wherein said statistically determining a power curve model for the wind farm using the remaining measurement data points further comprises averaging wind speed and power over intervals of from 5 minutes to 15 minutes.
16. A method in accordance with any of Clauses 9 to 15 wherein the measurement data points include measured power output for each of the wind turbines.
17. A machine readable medium or media having recorded thereon instructions configured to instruct a computer to monitor a wind farm comprising a plurality of wind turbines and a meteorological mast (met mast), said instructions configured to:
   collect measurement data points comprising at least wind speed and wind direction over time for each of the wind turbines and the met mast;
   remove measurement data points for wind turbines performing in a non-standard manner or that are unavailable to generate remaining measurement data points;
   statistically determine a power curve model for the wind farm using the remaining measurement data points; and
   outputting data corresponding to the power curve model.
18. A medium or media in accordance with Clause 17 wherein said instructions further configured to instruct the computer to determine in-wake zones for the wind turbines, and wherein to remove measurement data points for wind turbines performing in a non-standard manner, said instructions further configured to instruct the computer to remove measurement data points for wind turbines within in-wake zones.
19. A medium or media in accordance with Clause 17 or 18 wherein to remove measurement data points for unavailable wind turbines, said instructions further configured to instruct the computer to check at least one of manually set status flags and automatically set status flags for each wind turbine.
20. A medium or media in accordance with any of Clauses 17 to 19 wherein said instructions further configured to instruct the computer to determine in-wake zones for the wind turbines, and wherein to remove measurement data points for wind turbines performing in a non-standard manner, said instructions further configured to remove measurement data points for wind turbines within in-wake zones.
21. A medium or media in accordance with any of Clauses 17 to 20 wherein said instructions further configured to instruct the computer to determine and display at least one estimate of statistical confidence for the determined power curve.
22. A medium or media in accordance with any of Clauses 17 to 21 wherein the measurement data points include measured power output for each of the wind turbines.
23. A wind turbine farm comprising at least two wind turbines and a meteorological mast (met mast), said farm also comprising a control circuit that controls operation of the wind turbine, said control circuit configured to:
   collect measurement data points comprising at least wind speed and wind direction over time for each of the wind turbines and the met mast;
   remove measurement data points for wind turbines performing in a non-standard manner or that are unavailable to generate remaining measurement data points;
   statistically determine a power curve model for the wind farm using the remaining measurement data points; and
   outputting data corresponding to the power curve model.

## Claims

1. A machine readable medium or media having recorded thereon instructions configured to instruct a computer to monitor a wind farm (202) comprising a plurality of wind turbines (67, 68, 69, 70, 71, 72, 73, 74, 75, 76) and a meteorological mast (met mast) (204), said instructions configured to:
collect measurement data points (300) comprising at least wind speed and wind direction over time for each of the wind turbines and the met mast;
remove measurement data points for wind turbines performing in a non-standard manner or that are unavailable to generate remaining measurement data points;
statistically determine a power curve model (500) for the wind farm using the remaining measurement data points; and
outputting data corresponding to the power curve model.

2. A medium or media in accordance with Claim 1 wherein said instructions further configured to instruct the computer to determine in-wake zones for the wind turbines (67, 68, 69, 70, 71, 72, 73, 74, 75, 76), and wherein to remove measurement data points (300) for wind turbines performing in a non-standard manner, said instructions further configured to instruct the computer to remove measurement data points for wind turbines within in-wake zones.

3. A medium or media in accordance with any preceding Claim wherein to remove measurement data points (300) for unavailable wind turbines (67, 68, 69, 70, 71, 72, 73, 74, 75, 76), said instructions further configured to instruct the computer to check at least one of manually set status flags and automatically set status flags for each wind turbine.

4. A medium or media in accordance with any preceding Claim wherein said instructions further configured to instruct the computer to determine in-wake zones for the wind turbines (67, 68, 69, 70, 71, 72, 73, 74, 75, 76), and wherein to remove measurement data points (300) for wind turbines performing in a non-standard manner, said instructions further configured to remove measurement data points for wind turbines within in-wake zones.

5. A medium or media in accordance with any preceding Claim wherein said instructions further configured to instruct the computer to determine and display at least one estimate of statistical confidence for the determined power curve (500).

6. A medium or media in accordance with any preceding Claim wherein the measurement data points (300) include measured power output for each of the wind turbines (67, 68, 69, 70, 71, 72, 73, 74, 75, 76).

7. A wind turbine farm (202) comprising at least two wind turbines (67, 68, 69, 70, 71, 72, 73, 74, 75, 76) and a meteorological mast (met mast) (204), said farm also comprising a control circuit that controls operation of the wind turbine, said control circuit configured to:
collect measurement data points (300) comprising at least wind speed and wind direction over time for each of the wind turbines and the met mast;
remove measurement data points for wind turbines performing in a non-standard manner or that are unavailable to generate remaining measurement data points;
statistically determine a power curve model (500) for the wind farm using the remaining measurement data points; and
outputting data corresponding to the power curve model.
